# EUROPÄISCHE PATENTANMELDUNG

(11) **EP 3 503 689 A1**
(43) Veröffentlichungstag der Anmeldung: **26.06.2019**
(21) Anmeldenummer: 18215253.8
(22) Anmeldetag: 21.12.2018
(51) Int. Cl.: H05B 33/08

(54) **STEUERELEKTRONIK FÜR LED-BLITZLICHTANWENDUNGEN**

(30) Priorität: 22.12.2017 DE 102017011947
(71) Anmelder: SIMON IBV GmbH, 95494 Gesees (DE)
(72) Erfinder: SIMON, Christoph, 95447 Bayreuth (DE)
(74) Vertreter: Henkel, Breuer & Partner

(57) **Zusammenfassung**

Eine Steuervorrichtung zum Steuern einer LED-Blitzvorrichtung (7), die ausgestaltet ist, um sowohl Lichtblitze als auch eine Dauerbeleuchtung auszugeben, wobei die Steuervorrichtung eine Blitzpulssteuervorrichtung (3) mit einem ersten Strombegrenzer (33), der ausgestaltet ist, um einen ersten Strom (I_shunt_1) ausgangsseitig des ersten Wandlers (31) zu messen und darauf basierend den ersten Steuerstrom (I_shunt_steuer_1) auszugeben, wobei der erste Steuerstrom (I_shunt_steuer_1) auf einen ersten maximalen Steuerstrom (I_shunt_steuer_max_1) begrenzt ist, und eine zur Blitzpulssteuervorrichtung (3) parallel geschaltete Dauerbetrieb-Steuervorrichtung (9) mit einem zweiten Strombegrenzer (93), der ausgestaltet ist, um einen zweiten Strom (I_shunt_2) ausgangsseitig des zweiten Wandlers (91) zu messen und darauf basierend den zweiten Steuerstrom (I_shunt_steuer_2) auszugeben, wobei der zweite Steuerstrom (I_shunt_steuer_2) auf einen zweiten maximalen Steuerstrom (I_shunt_steuer_max_2) begrenzt ist, umfasst.

## Beschreibung

Die vorliegende Erfindung bezieht auf eine Steuervorrichtung zum Steuern einer LED-Blitzvorrichtung, ein Steuersystem umfassend die Steuervorrichtung und ein Steuerverfahren für die Steuervorrichtung.

Bei industriellen Bildverarbeitungslösungen bzw. Bildverarbeitungssystemen ist eine Kamera mit einer Steuervorrichtung verbunden, wobei die Steuervorrichtung basierend auf einem von der Kamera ausgegebenen Signal eine LED-Blitzvorrichtung steuert. Die Qualität der so erhaltenen Bildinformation wird wesentlich durch die Beleuchtungstechnik bestimmt, wobei sich Beleuchtungsszenarien je nach Anwendungszweck stark unterscheiden können.

Diese industriellen Bildverarbeitungslösungen erfordern meist große Pulslängen bei hohen Pulsfrequenzen und hohen Blitzleistungen. Dies führt zu hohen thermischen und elektrischen Belastungen der in der LED-Blitzvorrichtung vorgesehen Leuchtdiode (LED).

Um zu vermeiden, dass die LEDs der LED-Blitzvorrichtung überlastet werden, werden bei Steuervorrichtungen für LED-Blitzvorrichtung meistens fest eingestellte Maximalwerte jeweils für die Blitzleistung, Pulslänge und Pulsfrequenz bei diesen Steuervorrichtungen vorgegeben, so dass auch bei maximaler Blitzleistung, maximaler Pulslänge und maximaler Pulsfrequenz keine Überlastung der LEDs auftritt.

Dies führt aber zu Einschränkungen in der Brauchbarkeit dieser Steuervorrichtungen. Beispielsweise bei sehr kurzer Pulslängen und niedrigen Pulsfrequenzen können die LEDs auch Blitzleistungen vertragen, die höher sind, als der durch die Steuervorrichtung erlaubte Maximalwert.

Um dieses Problem zu lösen, wurden auch Steuervorrichtungen verwendet, die für die geplante Anwendung speziell ausgestaltet sind, d.h. bei denen für die durch die Beleuchtungssituation vorgegebene Umgebung die Leistungsgrenze der LEDs ausgenutzt wurden. Anders gesagt, es wird eine bestimmte Blitzleistung, eine bestimmte Pulslänge und eine bestimmte Pulsfrequenz fest vorgegeben, die so abgestimmt sind, dass die LED-Grenzen ausgeschöpft werden. Diese Steuervorrichtungen haben aber den Nachteil, dass sie nicht an neue Belichtungssituationen angepasst werden können, bei denen beispielsweise kürzere Pulslängen gewünscht sind, um etwaige Bewegungseffekte während der Aufnahme zu minimieren.

Ein weiteres Problem ergibt sich daraus, dass für einen Anlagenbediener und/oder Werker Lichtblitze, die zu schnellen und wahrnehmbaren Helligkeitsunterschieden führen, sich nachteilig aus wirken können, da der Anlagenbediener und/oder Werker durch die stroboskopartigen Lichtblitzpulse gestört wird, wobei die nachteilige Wirkung der Lichtblitzpulse mit der Lichtblitzhelligkeit zunimmt. Aus ergonomischen und/oder gesundheitlichen Gründen können somit teilweise keine LED-Blitzvorrichtung eingesetzt werden oder nur zusammen mit zusätzlichen Lichtschutzmitteln, die zu steigenden Kosten führen und einen Fertigungsablauf behindern.

Die Lichtblitze werden insbesondere dann von dem Anlagenbediener und/oder Werker als störend empfunden, je größer eine Differenz zwischen der Lichtblitzhelligkeit und einer Helligkeit im Dauerbetrieb im unmittelbaren bzw. nahen Umfeld der Blitzvorrichtung ist, da dann ein Lichtkontrast im Moment eines Auslösens des Lichtblitzes groß ist und ein Pupillenreflex des Anlagenbedieners und/oder Werkers stark ist.

Es ist eine Aufgabe der Erfindung eine Steuervorrichtung zum Steuern einer LED-Blitzvorrichtung, ein Steuersystem und ein Steuerverfahren für die Steuervorrichtung vorzusehen, wobei die LED-Blitzvorrichtung unter Ausschöpfung des maximal möglichen Leistungsintegrals bzw. des bauartbedingten maximalen Leistungsbereichs der in der LED-Blitzvorrichtung verbauten LED betrieben werden kann, ohne die LED zu überlasten.

Es ist ferner eine Aufgabe der Erfindung eine Steuervorrichtung zum Steuern einer LED-Blitzvorrichtung, ein Steuersystem umfassend die Steuervorrichtung und ein Steuerverfahren für die Steuervorrichtung vorzusehen, wobei ein Hell-Dunkel-Kontrast zwischen einer Lichtblitzhelligkeit und einer Helligkeit in einem Dauerbetrieb im unmittelbaren bzw. nahen Umfeld der Blitzvorrichtung verringert ist, um eine Blitzbeleuchtung ergonomisch und/oder gesundheitlich zu verbessern, auch wenn die Lichtblitzhelligkeit selbst nicht verringert wird.

Diese Aufgaben werden erfindungsgemäß durch eine Steuervorrichtung zum Steuern einer LED-Blitzvorrichtung nach Anspruch 1, ein Steuersystem nach Anspruch 7 und ein Steuerverfahren für die Steuervorrichtung nach Anspruch 9 gelöst.

Die Steuervorrichtung zum Steuern der LED-Blitzvorrichtung, die ausgestaltet ist, um sowohl Lichtblitze als auch eine Dauerbeleuchtung auszugeben, umfasst eine Blitzpulssteuervorrichtung, die ausgestaltet ist, um eingangsseitig mit einer Spannungsquelle und ausgangsseitig mit einer LED-Blitzvorrichtung verbunden zu werden. Die Blitzpulssteuervorrichtung umfasst einen ersten DC-DC-Wandler, der ausgestaltet ist, um eine eingangsseitig von der Spannungsquelle anliegende Eingangsspannung basierend auf einer ersten Steuerspannung und einem ersten Steuerstrom ausgangsseitig als eine erste Ausgangsspannung auszugeben, und einen ersten Strombegrenzer, der ausgestaltet ist, um einen ersten Strom ausgangsseitig des ersten DC-DC-Wandlers zu messen und darauf basierend den ersten Steuerstrom auszugeben, wobei der erste Steuerstrom auf einen ersten maximalen Steuerstrom begrenzt ist. Ferner umfasst die Steuervorrichtung eine Dauerbetrieb-Steuervorrichtung, die ausgestaltet ist, um eingangsseitig mit der Spannungsquelle und ausgangsseitig parallel zu der Blitzpulssteuervorrichtung mit der LED-Blitzvorrichtung verbunden zu werden. Die Dauerbetrieb-Steuervorrichtung umfasst einen zweiten DC-DC-Wandler, der ausgestaltet ist, um die eingangsseitig von der Spannungsquelle anliegende Eingangsspannung basierend auf einer zweiten Steuerspannung und einem zweiten Steuerstrom ausgangsseitig als eine zweite Ausgangsspannung auszugeben, und einen zweiten Strombegrenzer, der ausgestaltet ist, um einen zweiten Strom ausgangsseitig des zweiten DC-DC-Wandlers zu messen und darauf basierend den zweiten Steuerstrom auszugeben, wobei der zweite Steuerstrom auf einen zweiten maximalen Steuerstrom begrenzt ist.

Durch das Vorsehen der erfindungsgemäßen Steuervorrichtung zum Steuern einer LED-Blitzvorrichtung werden für einen Arbeiter bzw. Werker zwei ergonomische Vorteile erzielt, zum Einen fungiert die LED-Blitzbeleuchtung in einem Dauerbetrieb als eine ergonomische Arbeitsplatzbeleuchtung mit einstellbarer Beleuchtungsstärke sowie als Vorrichtung zur Abgabe eines Lichtblitzes zur Zeit einer Kameraaufnahme und zum Anderen verringert die Steuervorrichtung den Blitzkontrast und minimiert somit den Pupillenreflex.

Des Weitern kann durch die erfindungsgemäße Steuervorrichtung ein Leistungsbereich einer in einer LED-Blitzvorrichtung verbauten Leuchtdiode (LED) optimal ausgenutzt werden, ohne diese zu überlasten bzw. zu zerstören.
- Fig. 1: ist eine schematische Darstellung einer Steuervorrichtung zum Steuern der LED-Blitzvorrichtung;
- Fig. 2a-c: sind Diagramme, die eine Lichtblitz-Pulsleistung mit steigender ersten Steuerspannung zeigen;
- Fig. 3a-b: sind Diagramme, die eine Schutzfunktion bei zunehmender Lichtblitz-Pulslänge während eines Lichtblitzes darstellen;
- Fig. 4a-c: sind Diagramme, die eine Schutzfunktion bei zunehmender Lichtblitz-Pulsfrequenz während eines Lichtblitzes darstellen;
- Fig. 5a-d: sind Diagramme, die eine Schutzfunktion bei zunehmender Lichtblitz-Pulsdichte bzw. zunehmendem Lichtblitz-Pulstastgrad während eines Lichtblitzes darstellen;
- Fig. 6: ist ein Diagramm, das eine Erholungsphase nach einem Lichtblitz während eines Dauerbetriebs darstellt;
- Fig. 7a-c: sind Diagramme, die eine Schutzfunktion bei zunehmender Lichtblitz-Pulsfrequenz während des Dauerbetriebs darstellen; und.
- Fig. 8a-c: sind Diagramme, die eine Schutzfunktion bei zunehmender Lichtblitz-Pulsdichte bzw. zunehmendem Lichtblitz-Pulstastgrad während eines Dauerbetriebs darstellen.

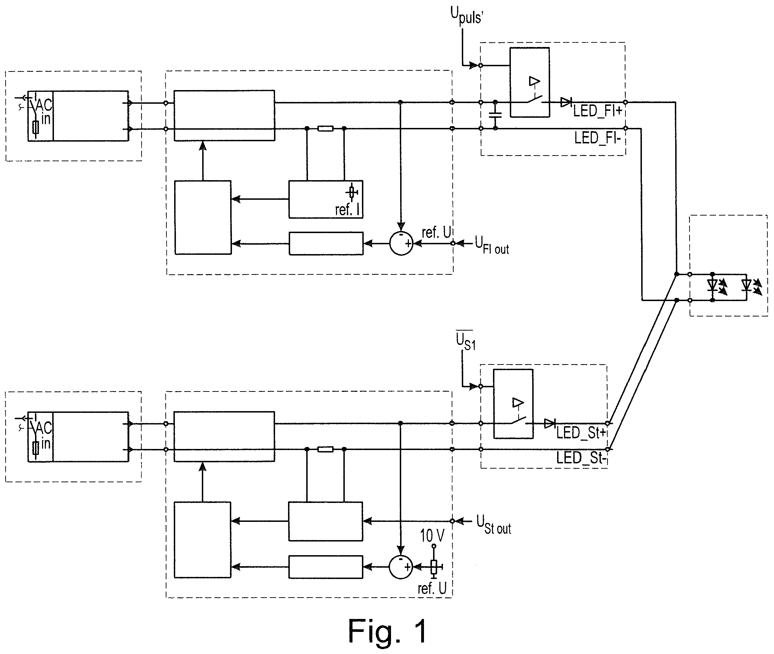

Eine in Figur 1 dargestellte Steuervorrichtung 1 zum Steuern einer LED-Blitzvorrichtung 7 umfasst sowohl eine Blitzpulssteuervorrichtung 3 als auch eine Dauerbetrieb-Steuervorrichtung 9, wobei die zwei Steuervorrichtung elektrisch parallel zueinander mit der LED-Blitzvorrichtung 7 verbunden sind. Mit anderen Worten, sowohl die Blitzpulssteuervorrichtung 3 als auch die Dauerbetrieb-Steuervorrichtung 9 können die LED-Blitzvorrichtung 7 mit elektrischer Energie versorgen. Hierfür ist sowohl die Blitzpulssteuervorrichtung 3 als auch die Dauerbetrieb-Steuervorrichtung 9 eingangsseitig mit einer Spannungsquelle 5 und ausgangsseitig mit der LED-Blitzvorrichtung 7 verbunden. Die LED-Blitzvorrichtung 7 umfasst zumindest eine Leuchtdiode LED 71, 72.

Die LED-Blitzvorrichtung 7 ist ausgestaltet, um durch eine Energiezufuhr von der Blitzpulssteuervorrichtung 3 Lichtblitze und durch eine Energiezufuhr von der Dauerbetrieb-Steuervorrichtung 9 eine Dauerbeleuchtung auszugeben.

Wie oben beschrieben wirken sich für einen Anlagenbediener und/oder Werker Lichtblitze nachteilig aus und werden insbesondere dann von dem Anlagenbediener und/oder Werker als störend empfunden, je größer eine Differenz zwischen der Lichtblitzhelligkeit und einer Helligkeit im Dauerbetrieb im unmittelbaren bzw. nahem Umfeld der Blitzvorrichtung ist, da dann ein Lichtkontrast im Moment eines Auslösens des Lichtblitzes groß ist und ein Pupillenreflex des Anlagenbedieners und/oder Werkers stark ist. Durch Vorsehen der Dauerbetrieb-Steuervorrichtung 9 kann die Differenz zwischen der Lichtblitzhelligkeit und der Helligkeit im Dauerbetrieb im unmittelbaren Umfeld der Blitzvorrichtung verringert werden, da die LED-Blitzvorrichtung 7 zwischen einzelnen Lichtpulsen im Dauerbetrieb Licht abgeben kann. Ein Einsatz von LED-Blitzvorrichtung 7 in industriellen Prozessen wird somit möglich.

Die Blitzpulssteuervorrichtung 3 umfasst einen ersten DC-DC-Wandler 31, einen ersten Strombegrenzer 33, eine Ausgangstufe 35, einen ersten Regler 37 und einen ersten Pulsweitenmodulator 39.

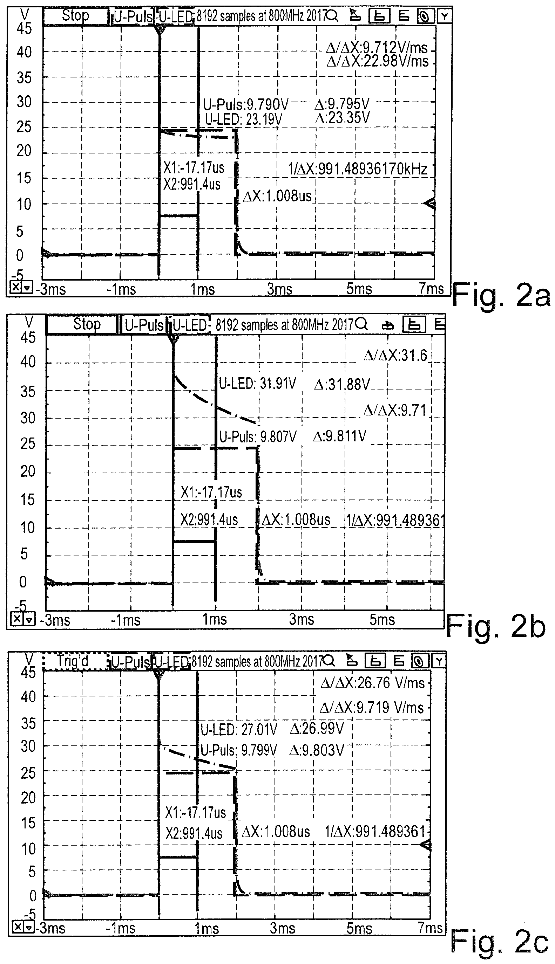

Der erste DC-DC-Wandler 31 ist ausgestaltet, um eine eingangsseitig von der Spannungsquelle 5 anliegende Eingangsspannung U_DC_DC_in basierend auf einer ersten Steuerspannung U_Fl_out und einem ersten Steuerstrom I_shunt_steuer_1 ausgangsseitig als eine erste Ausgangsspannung U_DC_DC_out_1 über eine erste Ausgangstufe 35 an die LED 71, 72 auszugeben. Die erste Steuerspannung U_Fl_out ist eine analoge Steuerspannung, die beispielsweise von einer Kamera zu der Blitzpulssteuervorrichtung 3 ausgegeben wird. Ein im industriellen Umfeld üblicher Spannungsbereich liegt für die erste Steuerspannung U_Fl_out im Bereich von 0V bis 10V, wobei eine Lichtblitz-Pulsleistung dynamisch mit einer Veränderung der ersten Steuerspannung U_Fl_out erhöht bzw. verringert werden kann, wie dies in Figuren 2a bis 2c dargestellt ist. Ist kein dynamisches Steuern des Lichtblitzes, d.h. der variablen Lichtblitz-Pulsleistung, mittels der ersten Steuerspannung U_Fl_out erforderlich, kann mit Hilfe eines optional vorzusehenden Potentiometers (nicht dargestellt) eine gewünschte fixe bzw. gleichbleibende Lichtblitz-Pulsleistung eingestellt werden. In diesem Fall kann die erste Steuerspannung U_Fl_out mit einer konstanten Speisespannung z.B. 24V gebrückt werden. Ferner kann durch bekannte Mittel, z.B. eine Diode mit Durchbruchspannung 1V seriell zu einem ersten analogen Steuereingang 32, eine Schwellspannung für die erste Steuerspannung U_Fl_out eingestellt werden, die mindestens angelegt werden muss, um einen Lichtblitz auslösen zu können.

Die erste Ausgangstufe 35 ist ausgestaltet, um mittels der ersten Ausgangsspannung U_DC_DC_out_1 kapazitiv eine Ladung zu speichern und die gespeicherte Ladung basierend auf einem ersten digitalen Steuersignal U_puls' als eine erste Gesamt-Ausgangsspannung LED_FL in Richtung der LED-Blitzvorrichtung 7 auszugeben. Die kapazitive Ladungsspeicherung kann beispielsweise durch einen oder mehrere Kondensatoren 34 erfolgen, die durch die erste Ausgangsspannung U_DC_DC_out_1 aufgeladen werden. Die Spannung U_puls' kann das Blitzauslösesignal der Kamera sein, dass zur Auslösung externer Blitzlichter bei Kameras gut bekannt ist. Bei Bedarf kann dieses Signal der Kamera durch geeignete nicht gezeigte Schaltungen in bekannter Weise nachgeschärft oder geglättet werden.

Die Ausgangstufe 35 ist mit einem digitalen zweiten Steuereingang 36 versehen, an welchem das erste digital Steuersignal U_puls' anliegt. Das das erste digitale Steuersignal U_puls' steuert einen ersten Schalter 38, z.B. ein MOSFET, so, dass ein abgegebener Lichtblitz so lange wie eine Pulsweite des ersten digitalen Steuersignals U_puls' dauert. In der Regel ist die Pulsweite des ersten digitalen Steuersignals U_puls' identisch mit der Belichtungszeit der Kamera bzw. auf diese abgestimmt.

Die Blitzpulssteuervorrichtung 3 ist mit dem ersten analogen Steuereingang 32 versehen, der dazu dient, eine von der LED-Blitzvorrichtung 7 abgegebene Lichtblitz-Pulsleistung und damit eine Lichtblitzhelligkeit einzustellen, d.h. den abgegebenen Lichtblitz mittels der ersten Steuerspannung U_Fl_out auf gewünschte Ablichtungsverhältnisse einzustellen.

Das Einstellen der Lichtblitz-Pulsleistung geschieht mittels eines Reglers 37, der ausgestaltet ist, um basierend auf einem ersten Vergleich der ersten Ausgangsspannung U_DC_DC_out_1 und der ersten Steuerspannung U_Fl_out eine erste Regelgröße U_regel_1 an einen ersten Pulsweitenmodulator 39 auszugeben.

Ein erster Strombegrenzer 33 ist ausgestaltet, um einen ersten Strom I_shunt_1 ausgangsseitig des ersten DC-DC-Wandlers 31 zu messen und darauf basierend den ersten Steuerstrom I_shunt_steuer_1 zu dem ersten Pulsweitenmodulator 39 auszugeben. Der erste Steuerstrom I_shunt_1 ist dabei der Strom, welcher von der LED-Blitzvorrichtung 7 zur Masse über einen ersten Widerstand 331 abfließt. Der erste Widerstand 331 ist dabei bevorzugt ein niederohmiger Messwiderstand wie beispielsweise ein Shunt-Widerstand.

Der erste Pulsweitenmodulator 39 ist ferner ausgestaltet, um basierend auf der ersten Regelgröße U_regel_1, die von dem ersten Regler 36 ausgegeben wird, und dem ersten Steuerstrom I_shunt_steuer_1, der von dem ersten Strombegrenzer 33 ausgegeben wird, den ersten DC-DC-Wandler 31 zu steuern.

Zudem begrenzt der erste Strombegrenzer 33 den ersten Steuerstrom I_shunt_steuer_1 auf einen ersten maximalen Steuerstrom I_shunt_steuer_max_1. Genauer gesagt, wird der ersten Strom I_shunt_1 ausgangsseitig des ersten DC-DC-Wandlers 31 bestimmt und die erste Ausgangsspannung U_DC_DC_out_1 in Abhängigkeit eines Zeit-Integrals des ersten Stroms I_shunt_1 abgeschwächt. Das Abschwächen der ersten Ausgangsspannung U_DC_DC_out_1 basiert dabei auf einer durch den ersten Strombegrenzer 33 vorgegebenen Funktion.

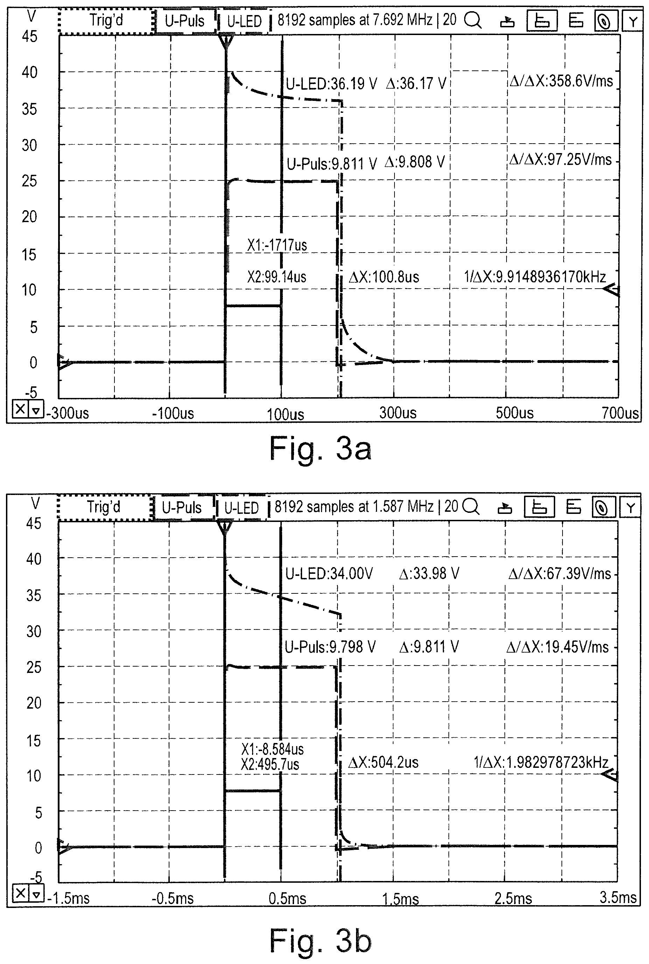

Mit zunehmender Lichtblitz-Pulsdauer wird so die erste Ausgangsspannung U_DC_DC_out_1 kontinuierlich abgeschwächt, um die LED-Blitzvorrichtung 7 thermisch nicht zu gefährden. Dies ist beispielhaft in den Figuren 3a und 3b dargestellt.

In der Figur 3a ist ein Lichtblitz mit einer Lichtblitz-Pulslänge von 200*µ*s dargestellt, wobei die Spannung der LED U_LED hier ca. 36V beträgt.

Im Vergleich dazu ist in Figur 3b ein Lichtblitz mit einer Lichtblitz-Pulslänge von 1ms dargestellt, wobei die Spannung der LED U_LED hier ca. 34V beträgt.

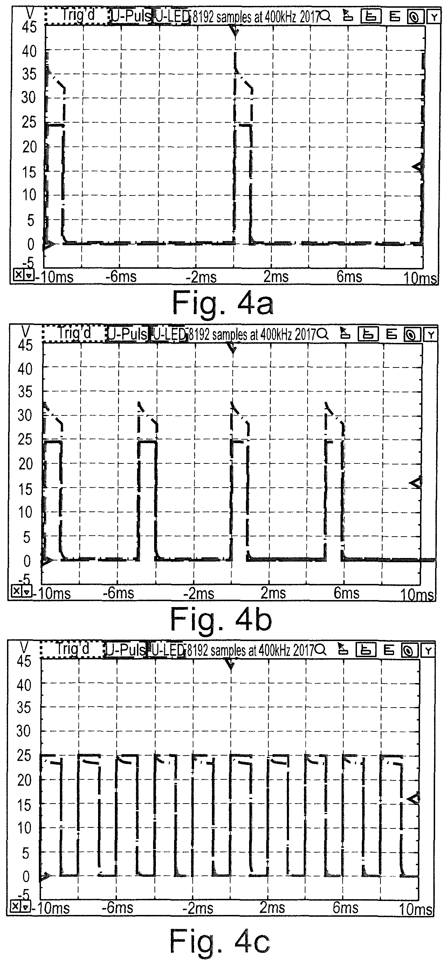

Auch mit zunehmender Lichtblitz-Pulsfrequenz nimmt die durchschnittlich abgegebene LED-Leistung zu. Erreicht diese bei einer aktuell eingestellten Lichtblitz-Pulslänge eine einstellbare bzw. vorbestimmte Grenze der angeschlossenen LED-Blitzvorrichtung 7, wird zum Schutz der LED-Blitzvorrichtung 7 die abgegebene Lichblitz-Einzelpulsenergie auf einen ungefährlichen Wert abgeschwächt. Dies ist beispielhaft in Figuren 4a bis 4c dargestellt, wobei Figuren 4a bis 4c einen Lichtblitz mit einer Lichtblitz-Pulslänge von 1ms darstellen. In Figur 4a beträgt eine Lichtblitz-Pulsfrequenz 100Hz, in Figur 4b beträgt eine Lichtblitz-Pulsfrequenz 200Hz, in Figur 4c beträgt eine Lichtblitz-Pulsfrequenz 500Hz, wobei eine Spannung der LED U_LED mit zunehmender Lichtblitz-Pulsfrequenz von Figur 4a nach Figur 4c abnimmt.

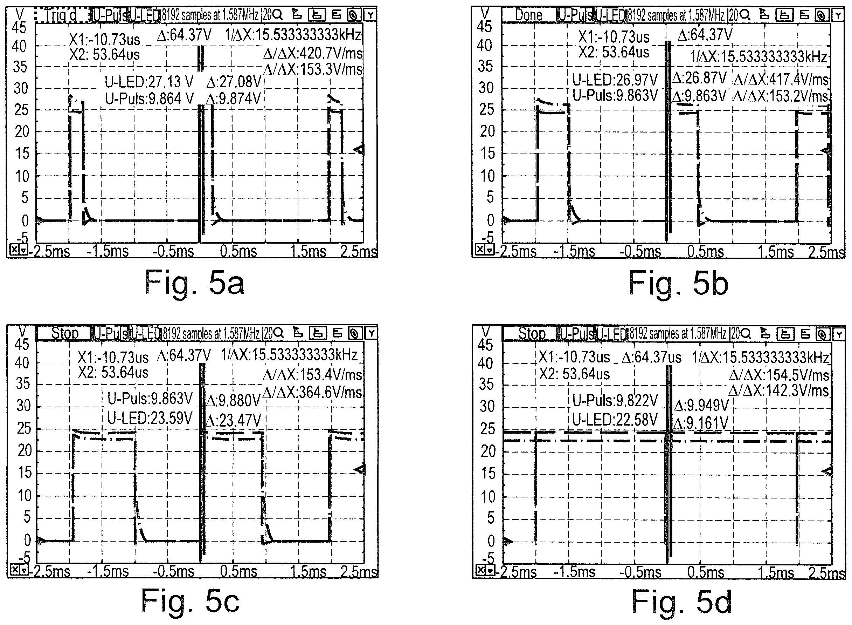

Mit zunehmender Lichtblitz-Pulslänge nimmt auch der Lichtblitz-Tastgrad bzw. die Lichtblitz-Pulsdichte und damit auch die durchschnittlich abgegebene Leistung der LED-Blitzvorrichtung 7 zu. Erreicht diese bei der aktuell eingestellten Lichtblitz-Pulsfrequenz die einstellbare Grenzleistung der angeschlossenen LED-Blitzvorrichtung 7, wird zum Schutz der LED-Blitzvorrichtung 7 die abgegebene Lichtblitz-Einzelpulsenergie auf einen ungefährlichen Wert abgeschwächt. Dies ist beispielhaft in Figuren 5a bis 5d dargestellt, wobei Figuren 5a bis 5d einen Lichtblitz mit einer Lichtblitz-Pulsfrequenz von 1000Hz darstellen. In Figur 5a beträgt ein Lichtblitz-Tastgrad 10%, in Figur 5b beträgt ein Lichtblitz-Tastgrad 25%, in Figur 5c beträgt ein Lichtblitz-Tastgrad 50%, und in Figur 5d beträgt ein Lichtblitz-Tastgrad 99%, wobei eine Spannung der LED U_LED mit zunehmender Tastgrad von Figur 5a nach Figur 5d abnimmt.

Das Begrenzen bzw. Regeln des ersten Steuerstroms I_shunt_steuer_1 bietet somit Schutz bei langen Lichtblitzen, Schutz bei hohen Lichtblitz-Pulsfrequenzen und Schutz bei hohem Lichblitz-Tastgrad bzw. hoher Lichtblitz-Pulsdichte für die LED-Blitzvorrichtung 7.

Die Dauerbetrieb-Steuervorrichtung 9 umfasst einen zweiten DC-DC-Wandler 91, einen zweiten Strombegrenzer 93, eine Ausgangstufe 95, einen zweiten Regler 97 und einen zweiten Pulsweitenmodulator 39.

Der zweite DC-DC-Wandler 91 ist ausgestaltet, um eine eingangsseitig von der Spannungsquelle 5 anliegende Eingangsspannung U_DC_DC_in basierend auf einer zweiten Steuerspannung U_ref und einem zweiten Steuerstrom I_shunt_steuer_2 ausgangsseitig als eine zweite Ausgangsspannung U_DC_DC_out_2 zu einer zweiten Ausgangstufe 95 auszugeben. Die zweite Steuerspannung U_ref ist eine konstante Steuerspannung, die beispielsweise, wie in Fig. 1 dargestellt, konstant 10V beträgt.

Die zweite Ausgangstufe 95 ist ausgestaltet, um die zweite Ausgangsspannung U_DC_DC_out_2 basierend auf einem zweiten Steuersignal U_S1 als eine zweite Gesamt-Ausgangsspannung LED_ST in Richtung der LED-Blitzvorrichtung 7 auszugeben, wobei die zweite Ausgangstufe 95 ferner eine Diode 951 umfasst, um einen Rückstrom in Richtung des zweiten DC-DC-Wandler 91 zu verhindern.

Die zweite Ausgangstufe 95 ist mit einem digitalen dritten Steuereingang 96 versehen, an welchem das zweite digital Steuersignal U_S1 anliegt. Das zweite digitale Steuersignal U_S1 steuert einen ersten Schalter 98, z.B. ein MOSFET, so, dass die zweite Ausgangstufe 95 die zweite Gesamt-Ausgangsspannung LED_ST, die zu der zweiten Ausgangsspannung U_DC_DC_out_2 korrespondiert, zu der LED-Blitzvorrichtung 7 ausgibt.

Die Dauerbetrieb-Steuervorrichtung 9 ist fernen mit einem zweiten analogen Steuereingang 92 versehen, der dazu dient, eine von der LED-Blitzvorrichtung 7 abgegebene Lichtleistung und damit eine Lichthelligkeit einzustellen, d.h. die abgegebene Lichtleistung wird während des Dauerbetriebs der LED-Blitzvorrichtung 7 durch Einstellen einer Dauerbetrieb-Steuerspannung U_St auf eine gewünschte Helligkeit eingestellt.

Das Einstellen der Lichtleistung geschieht ferner mittels eines Reglers 97, der ausgestaltet ist, um basierend auf einem zweiten Vergleich der zweiten Ausgangsspannung U_DC_DC_out_2 und der zweiten Steuerspannung U_ref eine zweite Regelgröße U_regel_2 an einen zweiten Pulsweitenmodulator 99 auszugeben. Der zweite Strombegrenzer 93 ist ausgestaltet, um einen zweiten Strom I_shunt_2 ausgangsseitig des zweiten DC-DC-Wandlers 91 zu messen und darauf basierend den zweiten Steuerstrom I_shunt_steuer_2 zu dem zweiten Pulsweitenmodulator 99 auszugeben. Der zweite Steuerstrom I_shunt_2 ist dabei der Strom, welcher von der LED-Blitzvorrichtung 7 zur Masse über einen zweiten Widerstand 991 abfließt. Der zweite Widerstand 991 ist dabei bevorzugt ein niederohmiger Messwiderstand wie beispielsweise ein Shunt-Widerstand. Bevorzugt sind der zweite und der erste Widerstand baugleich.

Der zweite Pulsweitenmodulator 99 ist ferner ausgestaltet, um basierend auf der zweiten Regelgröße U_regel_2, die von dem zweiten Regler 96 ausgegeben wird, und dem ersten Steuerstrom I_shunt_steuer_2, der von dem zweiten Strombegrenzer 93 ausgegeben wird, den zweiten DC-DC-Wandler 91 zu steuern.

Zudem begrenzt der erste Strombegrenzer 93 den ersten Steuerstrom I_shunt_steuer_2 auf einen zweiten maximalen Steuerstrom I_shunt_steuer_max_2. Genauer gesagt, wird der zweite Strom I_shunt_2 ausgangsseitig des zweiten DC-DC-Wandlers 91 bestimmt, und die zweite Ausgangsspannung U_DC_DC_out_2 wird in Abhängigkeit eines Zeit-Integrals des zweiten Stroms I_shunt_2 abgeschwächt. Das Abschwächen der zweiten Ausgangsspannung U_DC_DC_out_2 basiert dabei auf einer in dem zweiten Strombegrenzer 93 hinterlegten Funktion.

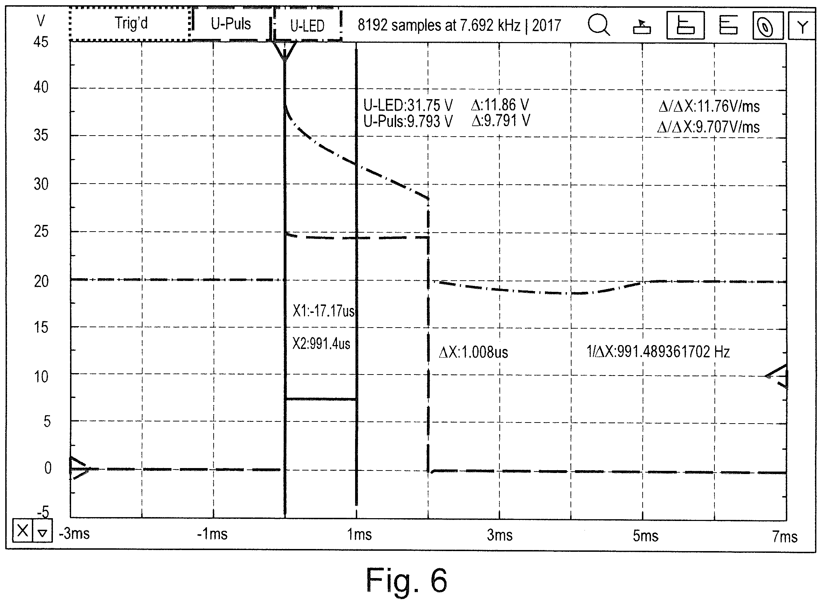

Durch die oben beschriebene in dem zweiten Strombegrenzer 33 hinterlegte Funktion kann bei einem kombinierten Betrieb aus Dauerlicht und Blitzlicht eine thermische Erholungsphase von beispielsweise mindestens 10ms Länge nach jedem Lichtblitz erhalten bzw. erzeugt werden. Dies ist beispielhaft in der Figur 6 dargestellt, wobei auf einen Lichtblitz eine thermische Erholungspause für die LED-Blitzvorrichtung 7 folgt, d.h. die Spannung im in Figur 6 beispielhaft dargestellten Fall der LED U_LED beträgt während des Dauerbetriebs 20V, steigt während eines von der Blitzpulssteuervorrichtung 3 ausgelösten Lichtblitzes an, sinkt anschließend für die Erholungsphase auf eine Spannung kleiner 20V (der Spannung während des Dauerbetriebs) und steigt am Ende der Erholungsphase wieder auf 20V an. Die Länge der Erholungsphase kann dabei proportional zur Lichtblitz-Pulsdauer sein.

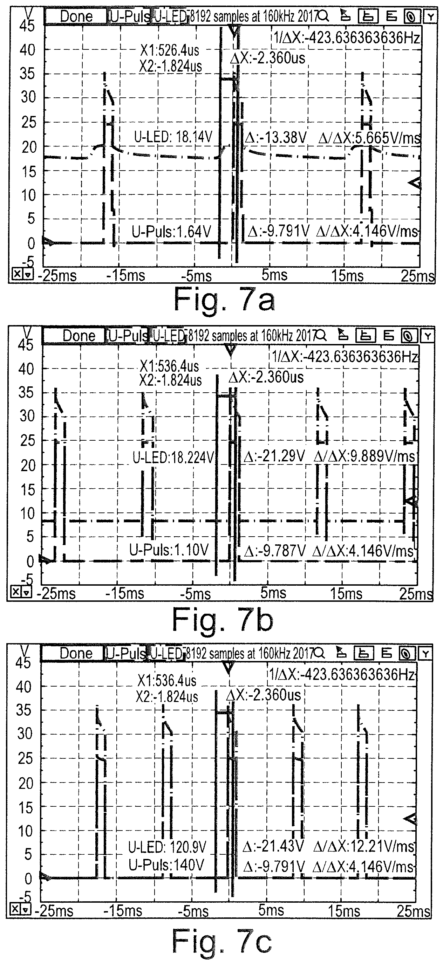

Mit zunehmender Lichtblitz-Pulsfrequenz erhöht sich eine integrale Leistungsaufnahme der angeschlossenen LED-Blitzvorrichtung 7, die wie oben beschrieben von dem zweiten Strombegrenzer 93 erfasst wird. Zum Schutz wird in der Erholungsphase mit steigender Lichtblitz-Pulsfrequenz die Dauerlichtleistung bis hin zu einer kompletten Deaktivierung des statischen Lichtanteils verringert. Dies ist beispielhaft in den Figuren 7a bis 7c dargestellt. In Figur 7a beträgt eine Lichtblitz-Pulsfrequenz 58Hz, in Figur 7b beträgt eine Lichtblitz-Pulsfrequenz 86Hz, und in Figur 7c beträgt eine Lichtblitz-Pulsfrequenz 115Hz, wobei eine Spannung der LED U_LED mit zunehmender Lichtblitz-Pulsfrequenz von Figur 7a nach Figur 7c während des Dauerbetriebs abnimmt.

Da das menschliche Auge Lichtpulse mit einer Frequenz von mehr als 100Hz als Dauerlicht wahrnimmt, bleibt dennoch der Vorteil erhalten, dass keine unangenehmen Helligkeitsschwankungen auftreten.

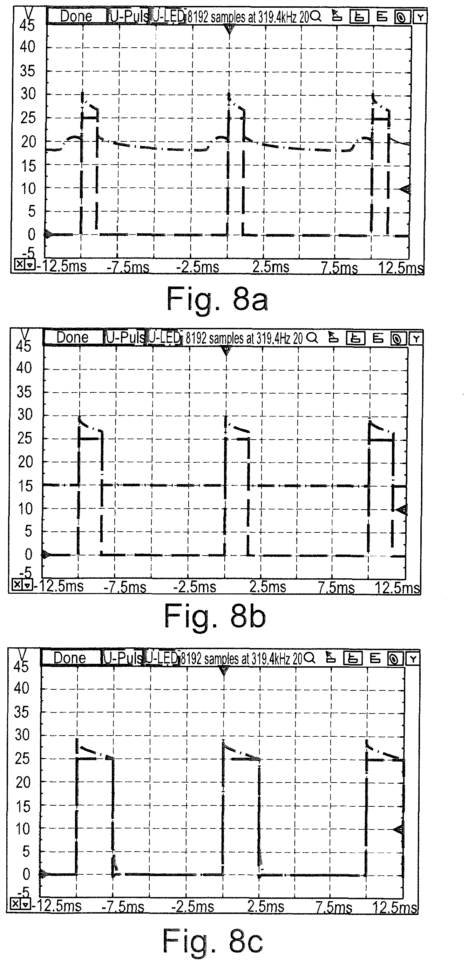

Mit zunehmendem Lichtblitz-Tastgrad bzw. zunehmender Lichtblitz-Pulsdichte erhöht sich die integrale Leistungsaufnahme der angeschlossenen LED-Blitzvorrichtung 7 ebenfalls. Zum Schutz wird auch hier die Erholungsphase mit steigender Lichtblitz-Pulsfrequenz bis hin zu einer kompletten Deaktivierung des statischen Lichtanteils bzw. einem Reduzieren der Helligkeit der LED-Blitzvorrichtung 7 während des Dauerbetriebs auf null verlängert. Dies ist beispielhaft in den Figuren 8a bis 8c dargestellt. In Figur 8a beträgt eine Lichtblitz-Pulsdichte 10%, in Figur 8b beträgt eine Lichtblitz-Pulsdichte 15%, und in Figur 8c beträgt eine Lichtblitz-Pulsdichte 25%, wobei eine Spannung der LED U_LED mit zunehmender Lichtblitz-Pulsdichte von Figur 8a nach Figur 8c während des Dauerbetriebs abnimmt.

Das Begrenzen bzw. Regeln des zweiten Steuerstroms I_shunt_steuer_2 bietet somit Schutz durch Einstellen der Spannung der LED U_LED bei langen Lichtblitzen, Schutz bei hohen Lichtblitz-Pulsfrequenzen und Schutz bei hohem Lichblitz-Tastgrad bzw. hoher Lichtblitz-Pulsdichte für die LED-Blitzvorrichtung 7 während des Dauerbetriebs.

Durch die Erfindung wird in jeder Betriebsart der LEDs 71, 72, sei es ein reiner Blitzbetrib, ein reiner Dauerbetrieb oder eine Kombination von beiden, der durch die LEDs 71, 72 fließende Strom auf die beiden Widerstände verteilt und dazu führen, dass die DC-DC-Wandler in ihrer Ausgabeleistung so begrenzt werden, dass ein wirksamer Schutz der LEDs 71, 72 bei gleichzeitiger maximaler Ausnutzung der Leistungsgrenzen der LEDs 71, 72 erreicht. D.h. im Blitzbetrieb können die LEDs 71, 72 kurzzeitig Ströme durchleiten, die um ein vielfaches höher sind, als der zulässige Dauerstrom, so dass die Lichthelligkeit eines Blitzes stark erhöht werden kann. Andererseits verhindert aber die Strombegrenzung durch die beschriebene Regelung, dass dieser erhöhte Strom zu lange oder zu oft angelegt wird. Da der Blitzstrom auch durch den Widerstand in der Dauerbetrieb-Steuervorrichtung fließt und somit zur Steuerung der Dauerbetrieb-Steuervorrichtung mitherangezogen wird, kann auch der Dauerbetrieb auf die tatsächlichen Blitzvorgaben eingestellt werden und der Schutz der LEDs wird durch den Dauerbetrieb nicht beeinträchtigt.

Bei der oben beschriebenen Steuerung 1 umfassend die Blitzpulssteuervorrichtung 3 und die Dauerbetrieb-Steuervorrichtung 9 ist der zu der LED-Blitzvorrichtung 7 abgegebene Gesamtstrom I_LED eine Summe aus dem von der Blitzpulssteuervorrichtung 3 abgegebenen Strom I_Puls und dem von der Dauerbetrieb-Steuervorrichtung 9 abgegebenen Strom I_Static. Der Gesamtstrom I_Puls teilt sich nach dem Passieren der LED-Blitzvorrichtung 7 gemäß der Stromteilerregel auf und fließt in einem konstanten Verhältnis, das zu dem Verhältnis des ersten Widerstands 331 und des zweiten Widerstands 991 korrespondiert, unabhängig von dem Verhältnis des von der Blitzpulssteuervorrichtung 3 abgegebenen Stroms I_Puls und des von der Dauerbetrieb-Steuervorrichtung 9 abgegebenen Stroms I_Static zur Masse ab. Anders ausgedrückt, wenn der erste Widerstand 331 und der zweite Widerstand 991 betragsmäßig gleich groß sind, fließt der Gesamtstrom I_Puls jeweils zur Hälfte über den ersten Widerstand 331 und den zweiten Widerstand 991 zur Masse ab, wobei die die Blitzpulssteuervorrichtung 3 und die Dauerbetrieb-Steuervorrichtung 9 galvanisch gekoppelt zur gleichen Masse verbunden sind. Eine über den ersten Widerstand 331 und den zweiten Widerstand 991 abfallende Spannung dient jeweils als Regelgröße für den ersten und den zweiten Strombegrenzer 331, 991, wobei der erste und der zweite Strombegrenzer 331, 991 so eingestellt sind, dass die Energieabgabe von der Blitzpulssteuervorrichtung 3 gegenüber der Energieabgabe der Dauerbetrieb-Steuervorrichtung 9 Vorrang hat (siehe Figuren 7 und 8).

Mit der oben beschriebenen Steuerung 1 kann folglich ein Reduzieren der von der LED-Blitzvorrichtung 7 abgegebener Lichtblitz-Pulsleistung und damit einer Lichtblitzhelligkeit vermieden werden, selbst wenn die Dauerbetrieb-Steuervorrichtung 9 auf einer maximalen Stufe betrieben wird. Ferner sorgt der Rückstrom des Stroms, der die LED-Blitzvorrichtung passiert hat, über den zweiten Widerstand 991 zur Masse für die Erholungsphase nach einem Lichtblitz, was eine integrale Leistungsbilanz zum Schutz der in der LED-Blitzvorrichtung 7 verbauten LEDs 71, 72 ausgleicht.

## Patentansprüche

1. Steuervorrichtung (1) zum Steuern einer LED-Blitzvorrichtung (7), die ausgestaltet ist, um sowohl Lichtblitze als auch eine Dauerbeleuchtung auszugeben, wobei die Steuervorrichtung umfasst:
eine Blitzpulssteuervorrichtung (3), die ausgestaltet ist, um eingangsseitig mit einer Spannungsquelle (5) und ausgangsseitig mit einer LED-Blitzvorrichtung (7) verbunden zu werden, wobei die Blitzpulssteuervorrichtung (3) umfasst:
einen ersten Wandler (31), der ausgestaltet ist, um eine eingangsseitig von der Spannungsquelle (5) anliegende Eingangsspannung (U_DC_DC_in) basierend auf einer ersten Steuerspannung (U_Fl_out) und einem ersten Steuerstrom (I_shunt_steuer_1) ausgangsseitig als eine erste Ausgangsspannung (U_DC_DC_out_1) auszugeben, und
einen ersten Strombegrenzer (33), der ausgestaltet ist, um einen ersten Strom (I_shunt_1) ausgangsseitig des ersten Wandlers (31) zu messen und darauf basierend den ersten Steuerstrom (I_shunt_steuer_1) auszugeben, wobei der erste Steuerstrom (I_shunt_steuer_1) auf einen ersten maximalen Steuerstrom (I_shunt_steuer_max_1) begrenzt ist,
eine Dauerbetrieb-Steuervorrichtung (9), die ausgestaltet ist, um eingangsseitig mit der Spannungsquelle (5) und ausgangsseitig parallel zu der Blitzpulssteuervorrichtung (3) mit der LED-Blitzvorrichtung (7) verbunden zu werden, wobei die Dauerbetrieb-Steuervorrichtung (9) umfasst:
einen zweiten Wandler (91), der ausgestaltet ist, um die eingangsseitig von der Spannungsquelle (5) anliegende Eingangsspannung (U_DC_DC_in) basierend auf einer zweiten Steuerspannung (U_ref) und einem zweiten Steuerstrom (I_shunt_steuer_2) ausgangsseitig als eine zweite Ausgangsspannung (U_DC_DC_out_2) auszugeben, und
einen zweiten Strombegrenzer (93), der ausgestaltet ist, um einen zweiten Strom (I_shunt_2) ausgangsseitig des zweiten Wandlers (91) zu messen und darauf basierend den zweiten Steuerstrom (I_shunt_steuer_2) auszugeben, wobei der zweite Steuerstrom (I_shunt_steuer_2) auf einen zweiten maximalen Steuerstrom (I_shunt_steuer_max_2) begrenzt ist.

2. Die Steuervorrichtung (1) gemäß Anspruch 1, wobei die Blitzpulssteuervorrichtung (3) ferner eine erste Ausgangstufe (35) umfasst, die ausgestaltet ist um mittels der ersten Ausgangsspannung (U_DC_DC_out_1) kapazitiv eine Ladung zu Speicher und die gespeicherte Ladung basierend auf einem ersten Steuersignal (U_puls') als eine erste Gesamt-Ausgangsspannung (LED_FL) in Richtung der LED-Blitzvorrichtung (7) auszugeben.

3. Die Steuervorrichtung (1) gemäß Anspruch 1 oder 2, wobei die Blitzpulssteuervorrichtung (3) ferner umfasst:
einen ersten Regler (37), und
einen ersten Pulsweitenmodulator (39),
wobei der Regler (37) ausgestaltet ist, um basierend auf einem ersten Vergleich der ersten Ausgangsspannung (U_DC_DC_out_1) und der ersten Steuerspannung (U_Fl_out) eine erste Regelgröße (U_regel_1) an den ersten Pulsweitenmodulator (39) auszugeben, und
wobei der erste Pulsweitenmodulator (39) ausgestaltet ist, um basierend auf der ersten Regelgröße (U_regel_1) und dem ersten Steuerstrom (I_shunt_steuer_1) den ersten Wandler (31) zu steuern.

4. Die Steuervorrichtung (1) gemäß einem der Ansprüche 1 bis 3, wobei die Dauerbetrieb-Steuervorrichtung (9) ferner eine zweite Ausgangstufe (95) umfasst, die ausgestaltet ist, um die zweite Ausgangsspannung (U_DC_DC_out_2) basierend auf einem zweiten Steuersignal (U_S1) als eine zweite Gesamt-Ausgangsspannung (LED_ST) in Richtung der LED-Blitzvorrichtung (7) auszugeben,
wobei die zweite Ausgangstufe (95) ferner eine Diode (951) umfasst, um einen Rückstrom in Richtung des zweiten Wandler (91) zu verhindern.

5. Die Steuervorrichtung (1) gemäß einem der Ansprüche 1 bis 4, wobei die Dauerbetrieb-Steuervorrichtung (9) ferner umfasst:
einen zweiten Regler (97), und
einen zweiten Pulsweitenmodulator (99),
wobei der Regler (97) ausgestaltet ist, um basierend auf einem zweiten Vergleich der zweiten Ausgangsspannung (U_DC_DC_out_2) und der zweiten Steuerspannung (U_ref) eine zweite Regelgröße (U_regel_2) an den zweiten Pulsweitenmodulator (99) auszugeben, und
wobei der zweite Pulsweitenmodulator (99) ausgestaltet ist, um basierend auf der zweiten Regelgröße (U_regel_2) und dem ersten Steuerstrom (I_shunt_steuer_2) den zweiten Wandler (91) zu steuern.

6. Die Steuervorrichtung (1) gemäß einem der Ansprüche 1 bis 5,
wobei die zweite Steuerspannung (U_ref) eine konstante Spannung ist.

7. Ein Steuersystem mit:
einer Steuervorrichtung (1) gemäß einem der Ansprüche 1 bis 6,
einer Spannungsquelle (5), die eingangsseitig mit der Blitzpulssteuervorrichtung (3) und der Dauerbetrieb-Steuervorrichtung (9) verbunden ist, und
einer LED-Blitzvorrichtung (7), die ausgangsseitig mit der Blitzpulssteuervorrichtung (3) und der Dauerbetrieb-Steuervorrichtung (9) verbunden ist, wobei die LED-Blitzvorrichtung ausgestaltet ist, um basierend auf der ersten Gesamt-Ausgangsspannung (LED_FL) einen Lichtblitz und basierend auf der zweiten Gesamt-Ausgangsspannung (LED_ST) eine Dauerbeleuchtung auszugeben.

8. Das Steuersystem nach Anspruch 7, wobei die LED-Blitzvorrichtung (7) zumindest eine Leuchtdiode (71,72) umfasst.

9. Ein Steuerverfahren für eine Steuervorrichtung (1) nach Anspruch 1, wobei das Steuerverfahren umfasst:
Bestimmen des ersten Stroms (I_shunt_1) ausgangsseitig des ersten Wandlers (31),
Ausgeben des ersten Steuerstroms (I_shunt_steuer_1), wobei der erste Steuerstrom (I_shunt_steuer_1) auf einen ersten maximalen Steuerstrom (I_shunt_steuer_max_1) begrenzt ist,
Bestimmen des zweiten Stroms (I_shunt_2) ausgangsseitig des zweiten Wandlers (91),
Ausgeben des zweiten Steuerstroms (I_shunt_steuer_2), wobei der zweite Steuerstrom (I_shunt_steuer_1) auf einen zweiten maximalen Steuerstrom (I_shunt_steuer_max_2) begrenzt ist.

10. Das Steuerverfahren gemäß Anspruch 9, wobei die erste Ausgangsspannung (U_DC_DC_out_1) in Abhängigkeit eines Zeit-Integrals des ersten Stroms (I_shunt_1) abgeschwächt wird und/oder die zweite Ausgangsspannung (U_DC_DC_out_2) in Abhängigkeit eines Zeit-Integrals des zweiten Stroms (I_shunt_2) abgeschwächt wird.
